# EUROPÄISCHE PATENTSCHRIFT

(11) **EP 2 884 246 B1**
(45) Veröffentlichungstag und Bekanntmachung des Hinweises auf die Patenterteilung: **16.08.2017**
(21) Anmeldenummer: 14004133.6
(22) Anmeldetag: 08.12.2014
(51) Int. Cl.: G01G 19/414, B60N 2/00, B60R 21/015

(54) **Modul für die Sitzbelegungserkennung eines Fahrzeugsitzes**
Module for detecting the occupancy of a vehicle seat
Module pour la reconnaissance d'occupation d'un siège de véhicule

(30) Priorität: 10.12.2013 DE 202013010947 U
(43) Veröffentlichungstag der Anmeldung: 17.06.2015
(73) Patentinhaber: I.G. Bauerhin GmbH, 63584 Gründau (DE)
(72) Erfinder: Yetim, Züher, D-63571 Gelnhausen (DE); Popp, Georg, D-63619 Bad Orb (DE)
(74) Vertreter: Grimm, Ekkehard

(56) Entgegenhaltungen:
- EP-A1- 2 100 779
- EP-A1- 2 168 820
- DE-A1-102010 033 624
- DE-U1-202010 003 563

## Beschreibung

Die vorliegende Erfindung betrifft ein Modul zur Sitzbelegungserkennung eines Fahrzeugsitzes gemäß dem Oberbegriff des Anspruchs 1. Ein solches Modul ist aus der DE 20 2010 003 563 U1 bekannt.

Ein Modul zur Sitzbelegungserkennung, das auch als Belegungserfassungseinrichtung bezeichnet werden kann, umfasst als wesentliches Bauteil mindestens eine druckempfindliche Sensorzelle. Diese Sensorzelle kann als Foliendrucksensor mit zwei übereinander liegenden und mittels Abstandsmaterial auf Abstand gehaltenen Folien ausgeführt sein. Üblicherweise weisen solche Foliendrucksensoren mindestens einen Anschlussbereich auf, bei dem mittels geeigneter Verbindungstechnik der Foliendrucksensor mit einem Zuleitungskabel elektrisch und mechanisch verbunden ist, das den Foliendrucksensor mit einem Steuergerät verbindet. Foliendrucksensoren werden üblicherweise im hinteren, mittleren Bereich eines Sitzpolsterelements angeordnet und können somit den durch eine Person oder ein Objekt über die Sitzfläche auf das Polsterelement ausgeübten Druck erfassen und dadurch den Belegungszustand des Sitzes ermitteln.

Weiterhin ist es bekannt, den Foliendrucksensor auf einem Trägerelement anzuordnen, mittels dem die Belegungserfassungseinrichtung beispielsweise an der Tragestruktur eines Sitzes positioniert und befestigt ist.

Die DE 20 2010 003 563 U1 beschreibt eine Drucksensor-Einheit zum Detektieren des Belegungszustands eines Kraftfahrzeugsitzes, die einen Drucksensor, der als Foliensensor mit zwei auf Abstand gehaltenen Folien mit einem dazwischen liegenden Abstandsmaterial ausgeführt ist, umfasst. Diese Drucksensor-Einheit ist als Modul aufgebaut. Sie umfasst eine Trägerplatte, auf der der Foliensensor aufgebracht ist, und mindestens eine zwischen der Trägerplatte und dem Foliensensor angeordneten, stauchbaren Reaktionsschicht. Die Trägerplatte weist Verbindungselemente auf, mittels der die Trägerplatte an der tragenden Struktur eines Sitzes verbindbar ist. Zusätzlich kann eine den Foliensensor auf seiner zum Sitzpolster hin weisenden Seite bedeckende Deckschicht vorgesehen sein.

Die DE 10 2010 033 624 A1 beschreibt ein Sitzplatzbelegungserkennungssystem für einen Kraftfahrzeugsitz mit bevorzugt Drucksensoren als Erfassungsmittel, die zwischen der Sitzschale und der Schaumstoffauflage des Kraftfahrzeugsitzes angeordnet sind. Diese Sensoren sollen erfassen, ob der zugeordnete Kraftfahrzeugsitz bestimmungsgemäß mit einer Person belegt ist.

Nachteilig bei den bekannten Anordnungen für die Sitzbelegungserkennung, die einen Foliendrucksensor einsetzen, ist, dass an dem Foliendrucksensor direkt Zuleitungskabel befestigt sind, die den Foliendrucksensor mit einem fahrzeugseitig angeordneten Steuergerät verbinden. Durch diese an dem Foliendrucksensor direkt verbundenen Zuleitungskabel ist die Möglichkeit gegeben, dass sich die Kabel an der Verbindungsstelle mit den Anschlussleitern des Foliendrucksensors lösen, bevor der Foliendrucksensor in das Modul eingebaut ist bzw. das Modul in einen Fahrzeugsitz montiert ist. Weiterhin behindern die an dem Foliendrucksensor verbundenen elektrischen Versorgungskabel, die eine erhebliche Länge aufweisen können, die Handhabung des Foliendrucksensors und/oder des entsprechenden Moduls bis zur Montage.

Die EP 2 100 779 A1 beschreibt eine Sensoranordnung, die für eine Sitzbelegungserkennung in einen Sitz (in dessen Sitzoberfläche) integriert wird. Das angegebene Modul soll möglichst flach gehalten werden, damit es sich nicht auf der Oberseite des Polsters durch den Sitzbezug abzeichnet. Das Modul bzw. die Sensoranordnung besteht aus einem Foliensensor mit einem flachen Verbindungskabel, über das der Foliensensor mit einer Steuerschaltung verbunden wird. Der Foliensensor besitzt eine erste Trägerfolie, die auf deren Unterseite durch einen Unterseitenfilm unterlegt ist. Auf der Trägerfolie befinden sich Leiterbahnen, die in einem laschenartig ausgebildeten Teil der Trägerfolie enden. Diese Leiterbahnen wiederum sind durch ein isolierendes Material abgedeckt. Zwischen der ersten Trägerfolie und einer zweiten Trägerfolie befindet sich ein aktiver Bereich mit Elektroden, der durch ein Abstandsmaterial begrenzt ist. Dieser Sensor wird dann aktiv, wenn die beiden Elektroden in Kontakt miteinander gebracht werden. Die Leiter des flachen Verbindungskabels sind an den Leiterbahnen des Foliensensors über ein leitfähiges Klebemittel verbunden; der Verbindungsbereich ist auf der Oberseite durch das flexible, isolierende Material abgedeckt, und darüber liegt ein den Laschenabschnitt zusätzlich abdeckender oberer Abdeckfilm. Zum Stand der Technik ist angegeben, dass es bekannt ist, das Verbindungskabel mit dem flexiblen Sensor durch eine Crimp-Verbindung zu verbinden, die allerdings dahingehend als nachteilig beschrieben wird, dass sie sich auf der Oberseite des Sitzes durch den Bezug abzeichnet. Der beschriebene Foliensensor wird unmittelbar auf der Sitzfläche eines Fahrzeugssitzes aufgelegt.

Die EP 2 168 820 A1 bezieht sich auf ein Polsterteil mit einem Schaumkörper, der eine als Sitzfläche dienende Oberseite aufweist, auf der, unterhalb eines Sitzbezuges, eine Sensormatte für eine Sitzbelegungserkennung angeordnet ist. Bei der Sensormatte handelt es sich um einen Foliendrucksensor, der mittels sogenannter Ankerlaschen, die sich an gegenüber liegenden Enden der Sensormatte befinden, an dem Polsterteil verankert wird, indem diese biegbaren Ankerlaschen nach unten gebogen und in Vertiefungen des Polsterteils hineingedrückt werden, wo sich Kopfteile der Ankerlaschen verhaken. An einer der beiden Ankerlaschen ist ein Kabel über Crimp-Verbindungen mit den auf der Ankerlasche verlaufenden Leiterbahnen verbunden; das Kabel führt zu einem Verbinder, der Teil einer elektronischen Steuereinheit ist.

Der vorliegenden Erfindung liegt nun die Aufgabe zugrunde, ein Modul für die Sitzbelegungserkennung zum Detektieren des Belegungszustands eines Sitzes zu schaffen, das die vorstehend angegebenen Nachteile vermeidet und insbesondere in einfacher Weise vor und während der Montage handhabbar ist und das zumindest eine zusätzliche Funktion übernehmen kann.

Diese Aufgabe wird durch ein Modul für die Sitzbelegungserkennung mit den Merkmalen des Anspruchs 1 gelöst. Vorteilhafte Ausgestaltungen des Moduls ergeben sich aus den abhängigen Ansprüchen.

Das erfindungsgemäße Modul zur Sitzbelegungserkennung zeichnet sich dadurch aus, dass jeder Crimpkontakt mit seinem freien Ende in eine entsprechende Aufnahme des Verbindungselements eingesteckt ist und im Bereich dieser Aufnahme durch einen Gegenkontakt kontaktiert werden kann. Hierdurch kann der Foliendrucksensor mit seinen Crimpkontakten an den Kontaktierungsenden der Anschlussleiter mit dem Verbindungselement, das an dem Trägerelement angeordnet ist, durch einen einfachen Einsteckvorgang verbunden werden. Bei der Handhabung des Foliendrucksensors bis zu seiner Montage an dem Trägerelement sind keine Leitungen vorhanden, die mit den Kontaktierungsenden der Anschlussleiter verbunden sind, die sich zum einen an den Kontaktstellen lösen könnten, da sie die Kontaktstellen mechanisch belasten, und die zum anderen die Handhabung des Foliendrucksensors erschweren. Die elektrische Verbindung mit einer fahrzeugseitig angeordneten Steuereinrichtung erfolgt erst, nachdem das Modul für die Sitzbelegungserkennung an einem Sitz montiert ist. Außerdem ist an dem Trägerelement eine Leuchtmittelaufnahme angeordnet.

Unter die Angabe Foliendrucksensor fallen alle Sensoren, die auf Druck, der darauf ausgeübt wird, ansprechen und die aus Folienschichten aufgebaut sind. Unter diesen Begriff sollen aber auch mechanische Drucksensoren in Form mindestens eines Mikroschalters oder auch mikromechanischen Drucksensors fallen, vorausgesetzt, dass sie eine geringe, d.h. flache, Bauhöhe aufweisen, so dass sie ähnlich eines Foliendrucksensors auf das Trägerelement aufgelegt werden können.

In einer Ausgestaltung weist der jeweilige an das Kontaktierungsende angecrimpte Crimpkontakt mindestens ein Befestigungselement auf, das die Leiterbahn von der einen Seite zu der anderen Seite hin durchdringt. Mit einem solchen Befestigungselement wird der Crimpkontakt zusätzlich an dem Kontaktierungsende mechanisch befestigt; darüber hinaus wird eine elektrisch gut leitende Verbindung erzielt. Zusätzlich kann ein solches Befestigungselement, das den Crimpkontakt durchdringt, mit seinem Ende so abgewinkelt werden, dass dieses Ende auf der Leiterbahn des Anschlussleiters aufliegt.

Das freie Ende des Crimpkontakts wird vorzugsweise als Steckkontakt ausgeführt, während der diesem Steckkontakt des Foliendrucksensors zugeordnete Gegenkontakt in dem Verbindungselement als eine diesen Steckkontakt aufnehmende Buchse ausgeführt ist. Somit muss der jeweilige als Steckkontakt ausgeführte Crimpkontakt des Foliendrucksensors bei dessen Montage auf dem Trägerelement des Moduls nur in die Buchse des Verbindungselements eingesteckt werden. Der Crimpkontakt sollte in der Buchse des Verbindungselements unter Reibschluss oder Kraftschluss, bevorzugter sowohl unter Reibschluss als auch unter Kraftschluss, eingreifen.

Die Buchse des Verbindungselements sollte als Kontaktbuchse, den Steckkontakt zumindest teilweise umschließend, ausgeführt werden, so dass der Steckkontakt über einen großen Flächenbereich einen elektrischen Kontakt mit der Buchse bildet.

Um ein Lösen zwischen dem freien Ende des Crimpkontakts und dem Gegenkontakt des Verbindungselements zu verhindern, kann die Aufnahme des Verbindungselements oder auch der Gegenkontakts des Verbindungselements und/oder der Crimpkontakt selbst mindestens ein Rastelement aufweisen, das in das jeweils andere Element rastend eingreift. Eine solche Rastverbindung kann so ausgelegt werden, dass eine einmal gebildete Verbindung zwischen diesen Teilen nicht mehr oder nur durch Anwendung spezieller Hilfsmittel gelöst werden kann. Ein solches Rastelement kann beispielsweise aus einem Federarm bestehen, der sich mit seinem Ende in dem anderen Teil verhakt.

Um zu erreichen, dass die freien Enden der Crimpkontakte des Foliendrucksensors und die Gegenkontakte des Verbindungselements in einer Ebene liegen, ist die Möglichkeit vorgesehen, dass das Verbindungselement in einer Vertiefung des Trägerelements eingelassen ist.

An dem Trägerelement ist eine Leuchtmittelaufnahme angeordnet. Mit diesem Leuchtmittel kann, da das Modul an der Unterseite eines Fahrzeugsitzgestells angeordnet wird, der Fußraum des Fahrzeugs beleuchtet werden. Somit bildet das Trägerelement in dem Modul nicht nur einen Funktionsträger für den Foliendrucksensor, sondern auch für ein weiteres elektrisches Funktionsteil. Auch für dieses elektrische Funktionsteil, beispielsweise das Leuchtmittel, kann mindestens ein Kontaktteil vorgesehen werden, das sich elektrisch mit entsprechenden Kontaktteilen in dem Verbindungselement verbindet.

In einer besonders bevorzugten Ausführungsform ist zumindest ein Teil des Verbindungselements einstückig mit dem Trägerelement ausgebildet. Hierbei kann es sich um ein Unterteil des Verbindungselements handeln, das durch ein separates Oberteil nach der Montage des Foliendrucksensors auf dem Trägerelement abgedeckt wird.

In einer weiteren Ausführungsform ist zwischen dem Trägerelement und dem Foliendrucksensor mindestens eine Reaktionsschicht angeordnet. Auch ist eine Ausführungsform vorgesehen, bei der beide Seiten des Foliendrucksensors durch jeweils eine Reaktionsschicht abgedeckt sind; dies bedeutet, dass sowohl zwischen dem Trägerelement und dem Foliendrucksensor als auch auf der gegenüberliegenden Seite des Foliendrucksensors jeweils eine solche Reaktionsschicht angeordnet ist. Eine stauchbare Reaktionsschicht ist für die Funktionsweise der Sensorzelle(n) von Vorteil, da eine solche Reaktionsschicht einen definierten Druck auf die Sensorzelle bewirkt und auch der Foliendrucksensor empfindlicher reagiert. Die stauchbare Reaktionsschicht kann über oder unter dem Foliendrucksensor angeordnet werden. Die Reaktionsschicht kann aus einem geschäumten Kunststoff bestehen. Darüber hinaus kann die Reaktionsschicht in Dickenrichtung unterschiedliche Stauchhärten aufweisen. Die Dickenrichtung der Reaktionsschicht ist die Richtung, die senkrecht zur Ebene des Foliendrucksensors verläuft.

Die Reaktionsschicht kann im Bereich unter der Deckplatte eine Fläche aufweisen, die gegenüber der Fläche der Deckplatte verkleinert und/oder im Bereich der Sensorzellen ausgespart ist; diese Aussparungen in den Bereichen der Sensorzellen können eine kreuzförmige oder sternförmige Kontur aufweisen. Durch eine solche Form der Reaktionsschicht kann die Empfindlichkeit des Foliendrucksensors eingestellt werden.

In einer weiteren Ausführungsform ist vorgesehen, dass auf der dem Trägerelement gegenüberliegenden Seite des Foliendrucksensors eine formstabile Deckplatte angeordnet ist.

Auch ist vorgesehen, dass zwischen Foliendrucksensor und Deckplatte eine Reaktionsschicht angeordnet ist. Mittels einer solchen Deckplatte werden Druckspitzen, die auf den Foliendrucksensor ausgeübt werden, gemittelt und Fehlstellen oder Unregelmäßigkeiten der Schaum- oder Sitzpolsterstruktur ausgeglichen.

Die Deckplatte soll bei den auftretenden Belastungen, die über eine auf dem Sitz sitzenden Person und den Polsterkern bzw. das Sitzpolster auf die Deckplatte ausgeübt werden, eine hohe Formstabilität aufweisen, um dadurch einen flächig verteilten Druck auf die Sensorzellen des Foliendrucksensors auszuüben. Um diese Biegesteifigkeit und Formstabilität zu gewährleisten, wird die Deckplatte vorzugsweise aus einer dünnen Metallplatte oder einem Kunststoffmaterial in einer entsprechenden Dicke gebildet. Falls die Deckplatte aus einem Kunststoffmaterial gebildet wird, wird bevorzugt ein Polyamid (PA) eingesetzt, wie beispielsweise PA6 oder PA66 oder PA46, auch mit Glasfaseranteil. Bevorzugt wird Polyamid 46 (PA46) eingesetzt. Die Dicke der Deckplatte, auch in einer Ausführung aus Metall, sollte 0,5 mm bis 2,5 mm, vorzugsweise 1 mm bis 2 mm, betragen.

Die Deckplatte wird an dem Trägerelement durch mindestens einen Stift in Richtung senkrecht zu der Ebene des Foliendrucksensors geführt. Durch diesen mindestens einen Stift wird die Bewegungsfreiheit der Deckplatte so eingeschränkt, dass sich die Deckplatte in Richtung senkrecht zu der Ebene des Foliendrucksensors bewegen kann, während gleichzeitig der mindestens eine Stift dazu beiträgt, die Deckplatte in Richtung senkrecht dazu in der Lage zu fixieren.

Der mindestens eine Stift kann entweder an der formstabilen Deckplatte oder an dem Trägerelement angeordnet sein; er wird an dem jeweils anderen Teil in einer Öffnung geführt, so dass er sich entsprechend verschieben kann.

In einer bevorzugten Ausgestaltung ist eine zwischen Foliendrucksensor und Deckplatte zwischengefügte Klebefläche vorgesehen. Diese zumindest teilweise vollflächig aufgebrachte Klebefläche weist im Bereich der einzelnen Sensorzellen des Foliendrucksensors Aussparungen auf, um dadurch eine entsprechende Vorlast auf die Sensorzellen des Foliendrucksensors zu verhindern bzw. zu minimieren. Die Größe der ausgesparten Klebefläche ist abhängig von der Größe des aktiven Bereichs der Sensorzellen. Als Klebeflächenmaterial kann ein doppelseitiges Klebeband oder aber auch ein Transferklebeband verwendet werden. Gute Eigenschaften zeigt Klebeflächenmaterial auf Basis eines Reinacrylat-Klebstoffs.

Mittels dieser zumindest teilweisen Verklebung zwischen dem Foliendrucksensor und der Deckplatte wird unter anderem verhindert, dass sich Fremdkörper auf oder unter dem Foliendrucksensor ansammeln können, so dass es zu keiner Fehl- oder Frühauslösung kommt.

Weitere Einzelheiten und Merkmale der Erfindung werden aus der nachfolgenden Beschreibung von Ausführungsbeispielen anhand der Zeichnung ersichtlich. In der Zeichnung zeigen
- Figur 1: ein Modul gemäß einer ersten Ausführung zur Sitzbelegungserkennung in perspektivischer Darstellung mit abgenommenem Abdeckteil des Verbindungselements,
- Figur 2: das Modul der Figur 1 mit einem das Verbindungselement abdeckenden Abdeckteil,
- Figur 3: den Foliendrucksensor mit Crimpkontakten, wie er beispielsweise in dem in den Figuren 1 und 2 gezeigten Modul eingesetzt ist,
- Figur 4: das Modul der Figur 2 in einer perspektivischen Explosionsdarstellung,
- Figur 5: ein erfindungsgemäßes Modul gemäß einer zweiten Ausführungsform, das in seinem Grundaufbau dem Modul der Figur 1 entspricht, in perspektivischer Darstellung, jedoch mit einer an dem Trägerelement angeordneten Leuchtmittelhelterung,
- Figur 6: das Modul der Figur 5 mit einem das Verbindungselement abdeckenden Abdeckteil,
- Figur 7: das Modul der Figur 5 in einer perspektivischen Explosionsdarstellung, und.
- Figur 8: das Modul entsprechend der Figur 4 mit einer zusätzlichen Deckplatte,
- Figur 9: das Modul entsprechend der Figur 8 mit zusätzlicher Klebefläche.

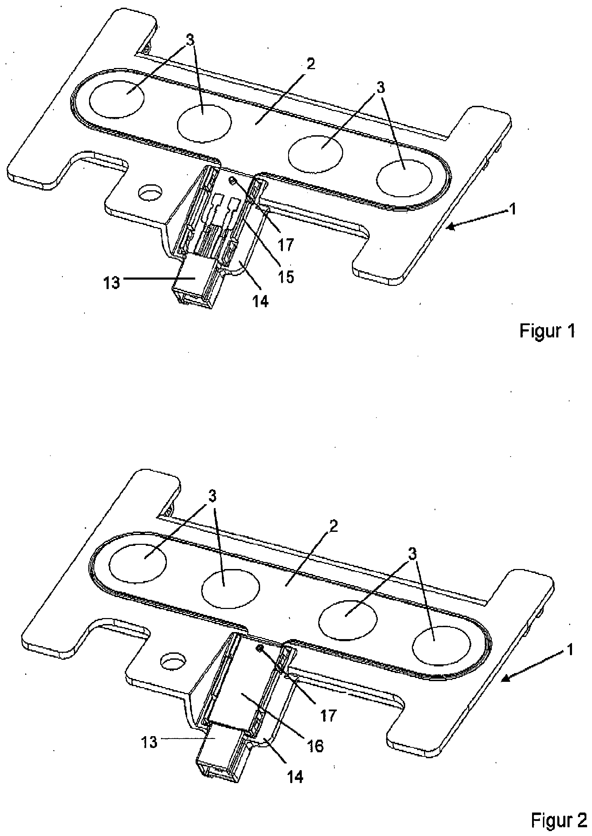

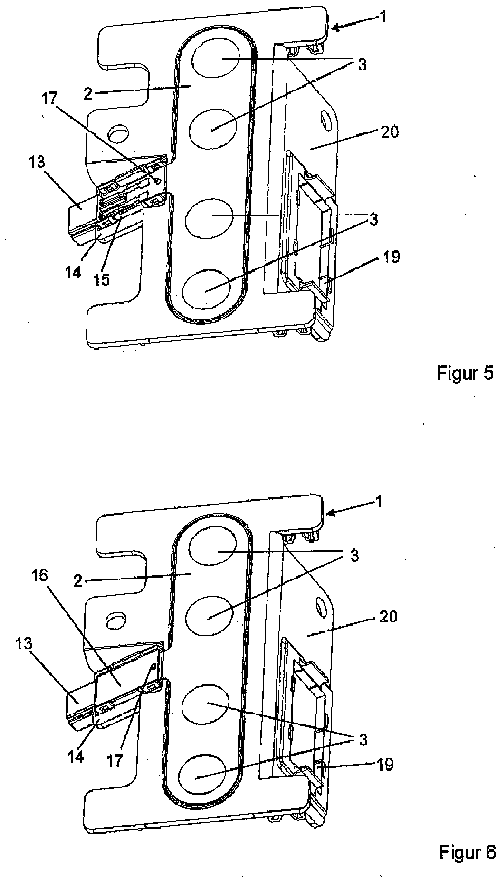

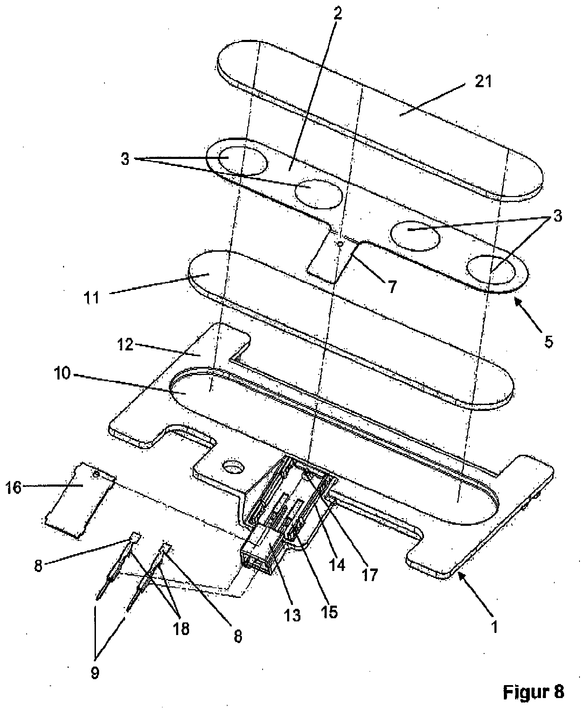

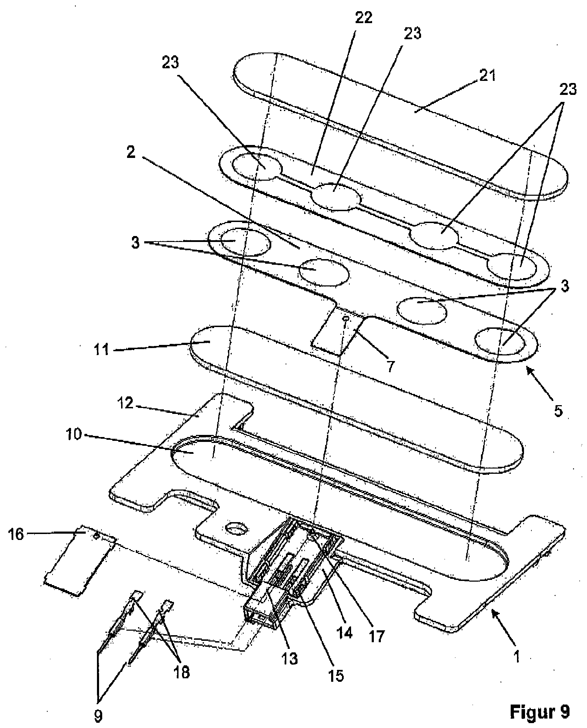

In ihrem Grundaufbau sind die Module für die Sitzbelegungserkennung eines Fahrzeugsitzes gemäß der ersten Ausführungsform, wie sie in den Figuren 1 bis 4 dargestellt ist, und einer zweiten Ausführungsform, wie sie in den Figuren 5 bis 7 dargestellt ist, vergleichbar; die Figuren 8 und 9 zeigen weitere Ausführungsformen, wie sie in den Figuren 1 bis 4 dargestellt sind. Daher kann die Beschreibung bestimmter Elemente der einen Ausführungsform entsprechend auf die andere Ausführungsform übertragen werden, ohne dass entsprechende Angaben zu der anderen Ausführungsform wiederholt werden.

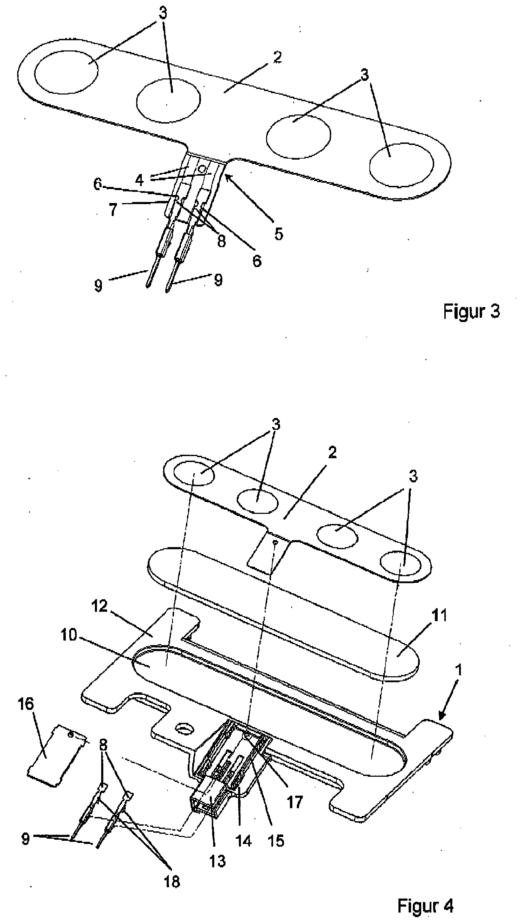

Die Module, wie sie in den Figuren dargestellt sind, umfassen ein plattenförmiges Trägerelement 1, auf das ein Foliendrucksensor 2 aufgelegt ist. Der Foliendrucksensor 2, der in Figur 3 im Detail gezeigt ist, umfasst in den dargestellten Ausführungsformen vier zueinander beabstandete Sensorzellen 3. Diese Sensorzellen 3 sind mit zwei Anschlussleitern 4 verbunden, bei denen es sich um Leiterbahnen handelt, die auf einer unteren Trägerfolie 5 des Foliendrucksensors 2 aufgebracht sind. Auch ist es möglich, dass die zwei Anschlussleiter jeweils getrennt sowohl auf der unteren als auch auf einer oberen Trägerfolie des Foliendrucksensors aufgebracht sind; die untere und die obere Trägerfolie sind durch ein Abstandsmaterial voneinander beabstandet, das nicht in den Figuren dargestellt ist. Im Bereich der Anschlussleiter 4 und deren Kontaktierungsenden 6 besitzt die Trägerfolie 5 eine Lasche 7. An diesen Kontaktierungsenden 6 der Anschlussleiter 4 ist jeweils ein Crimpkontakt 8 so positioniert und angecrimpt, dass deren freies Ende jeweils über das Ende der Lasche 7 vorsteht. Die Enden der Crimpkontakte 8 sind als Steckkontakte 9 ausgeführt.

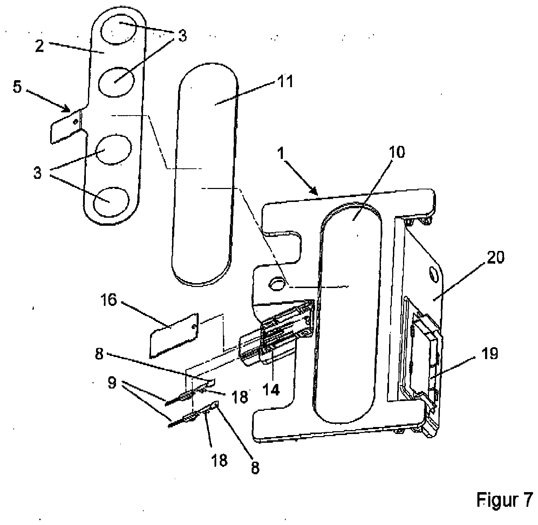

Die Crimpkontakte 8 sind, gelöst von den Kontaktierungsenden 6 der Anschlussleiter 4, in den beiden Explosionsdarstellungen der Figur 4 und 7 gezeigt.

Anhand der Figuren ist erkennbar, dass die Steckkontakte 9 und die Crimpkontakte 8 miteinander verschraubt sind, indem die Steckkontakte 9 als separate Bauteile vorgesehen sind. Es ist allerdings darauf hinzuweisen, dass in einer bevorzugten Ausführungsform der Crimpkontakt 8 und Steckkontakt 9 einteilig ausgeführt sind.

Wie insbesondere die Figuren 4 und 7 zeigen, besitzt das plattenförmige Trägerelement 1 eine Mulde oder Ausnehmung 10, in die eine reversibel verformbare Reaktionsschicht 11 eingelegt ist. Diese Reaktionsschicht 11 besitzt eine Dicke, die der Tiefe der Ausnehmung 10 entspricht, so dass im nicht gestauchten Zustand die Oberseite der Reaktionsschicht 11 mit der die Ausnehmung 10 begrenzenden Oberseitenfläche 12 des Trägerelements 1 abschließt.

Der Foliendrucksensor 2 besitzt, abgesehen von der Lasche 7, eine Form, die der Form der Reaktionsschicht 11 und damit der Form der Ausnehmung 10 entspricht.

In einer weiteren möglichen Ausführungsform, die nicht in den Figuren dargestellt ist, kann die Reaktionsschicht 11 gegenüber der Fläche des Foliendrucksensors 2 verkleinert und/oder ausgespart sein, so dass sich beispielsweise in den Bereichen der Sensorzelle 3 eine kreuzförmige oder sternförmige Form der Reaktionsschicht 11 ergibt. Durch eine solche Form der Reaktionsschicht 11 kann die Empfindlichkeit des Foliendrucksensors 2 eingestellt werden; je kleiner die Fläche der Reaktionsschicht 11 ist bzw. der Größe der Sensorzellen 3 angepasst ist, desto größer ist die Empfindlichkeit der Sensorzellen 3.

Wie wiederum die Figuren 1 und 5 zeigen, erstrecken sich dann, wenn der Foliendrucksensor 2 auf dem Trägerelement 1 oberhalb der Reaktionsschicht 11 positioniert ist, die freien Enden der Crimpkontakte 8 in ein Verbindungselement 13, in dem Gegenkontakte zu den Steckkontakten 9 integriert sind. Diese Gegenkontakte sind kleine Buchsen. Mit diesen Buchsen in dem Verbindungselement 13 können nach einer Montage des Moduls in einem Fahrzeugsitz flexible Leitungen, vorzugsweise über eine weitere Steckverbindung, angebracht werden, die den Foliendrucksensor 2 mit einem Steuergerät verbinden.

Das Verbindungselement 13 ebenso wie die Lasche 7 des Foliendrucksensors 2 und die an dem Foliendrucksensor 2 befestigten Crimpkontakte 8 sind in einer in dem Trägerelement 1 ausgebildeten Vertiefung 14 eingelassen, so dass diese Teile nicht über die die Ausnehmung 10 begrenzende Fläche des Trägerelements vorstehen. Die Lasche 7 mit den Kontaktierungsenden 6 der Anschlussleiter 4, die daran angecrimpten Crimpkontakte 8 und die Verbindungsenden der Steckkontakte 9 sind in ein Gehäuseunterteil 15 eingebettet, das von einem Gehäuseoberteil 16 abgedeckt ist. Das Gehäuseunterteil 15 besitzt einen Stift 17, der sich durch ein entsprechendes Zentrierloch der Lasche 7 des Foliendrucksensors 2 erstreckt, um den Foliendrucksensor 2 bei seiner Montage an dem Trägerelement 1 in der korrekten Position zu zentrieren. Dieser Zentrierstift 17 dient gleichzeitig zur Positionierung und Zentrierung des Gehäuseoberteils 16. Diese Art der Positionierung ist nicht zwingend erforderlich. In einer weiteren möglichen Ausführungsform, die nicht in den Figuren dargestellt ist, kann das Gehäuseoberteil 16 auf dessen Unterseitenfläche, die in Richtung des Foliendrucksensors 2 zeigt, mindestens ein Zugentlastungselement und/oder mindestens ein Zentrierelement, in Form eines Stiftes oder Steges, aufweisen.

Das Gehäuseunterteil 15 ist in den gezeigten Beispielen einstückig mit dem Trägerelement 1 ausgebildet.

Anhand der Figuren 4 und 7 ist zu erkennen, dass die Crimpkontakte 8 jeweils zwei Befestigungselemente in Form von Stiften 18 besitzen, die dann, wenn die Crimpkontakte 8 an die Anschlussleiter 4 angecrimpt werden, die Leiterbahn der Anschlussleiter 4 von der einen Seite zu der anderen Seite hin durchdringen. Auf der Rückseite stehen diese Stifte 18 von der Leiterbahn vor und werden so abgewinkelt, dass sie auf dem Anschlussleiter 4 aufliegen.

Das Modul der zweiten Ausführungsform, dargestellt in den Figuren 5 bis 7, umfasst das Trägerelement 1, das ebenso wie das Trägerelement 1 der ersten Ausführungsform mit der Bezugszeichen 1 bezeichnet ist, das zusätzlich eine Leuchtmittelaufnahme 19 aufweist, um dort eine nicht näher dargestellte Leuchtmitteleinheit zu befestigen, indem eine solche Einheit in einen Rahmen der Leuchtmittelaufnahme 19 eingeklemmt wird. Diese Leuchtmittelaufnahme 19 ist an einem zu dem Teil des Trägerelements 1, das die Ausnehmung 10 umfasst, abgewinkelten Plattenteil 20 angeordnet. Das daran befestigte Leuchtmittel dient dazu, beispielsweise den Fußraum eines Fahrzeugs zu beleuchten. Somit übernimmt das Trägerelement 1 nicht nur die Funktion, den Foliendrucksensor 2 aufzunehmen, sondern auch diejenige, ein Leuchtmittel in geeigneter Positionierung zu halten. Dieser Aufbau ist insbesondere dadurch von Vorteil, dass der Anschluss oder die Anschlüsse für das Leuchtmittel durch weitere Kontaktteile in dem Verbindungselement 13, die allerdings nicht in den Figuren dargestellt sind, erfolgen kann/können.

Die Figur 8 zeigt im Wesentlichen das Modul der ersten Ausführungsform, wie es in Figur 4 dargestellt ist, jedoch mit dem Unterschied gegenüber der Ausführungsform der Figur 4, dass es zusätzlich eine Deckplatte 21 aufweist.

Diese Deckplatte 21 ist auf der der Reaktionsschicht 11 gegenüberliegenden Seite des Foliendrucksensors 2 angeordnet und ist in Richtung senkrecht zu der Ebene des Foliendrucksensors geführt sowie in den Richtungen senkrecht dazu in der Lage fixiert. Für diese Fixierung und Führung werden an der Unterseite der Deckplatte 21 mehrere Stifte, die nicht dargestellt sind, angeordnet. Diese nicht dargestellten Stifte greifen in entsprechend positionierte Öffnungen in dem Trägerelement 1, die ebenfalls nicht dargestellt sind, ein.

Die Figur 9 zeigt im Wesentlichen das Modul der Ausführungsform der Figur 8, jedoch mit dem Unterschied gegenüber der Ausführungsform der Figur 8, dass zwischen der Deckplatte 21 und dem Foliendrucksensor 2 eine doppelseitig klebende Klebefläche 22, die auch als Abstandsschicht dient, zwischengefügt ist, die die Deckplatte 21 mit dem Foliendrucksensor 2 verbindet. Im Bereich der einzelnen Sensorzellen 3 des Foliendrucksensors 2 sind in der Klebefläche 22 Aussparungen 23 vorgesehen, so dass die Sensorzellen 3 im Ruhezustand auf Abstand gehalten und nicht ausgelöst werden. Durch diese Aussparungen 23 verhindert wird, dass auf die Sensorzellen 3 im unbelegten Zustand des Fahrzeugsitzes bereits Druck ausgeübt wird.

## Patentansprüche

1. Modul für die Sitzbelegungserkennung eines Fahrzeugsitzes und für die Anordnung an der Unterseite eines Fahrzeugsitzes, das ein plattenförmiges Trägerelement (1) aufweist, auf das ein Foliendrucksensor (2) aufgelegt ist, wobei der Foliendrucksensor (2) mindestens eine Sensorzelle (3) und mindestens zwei Anschlussleiter (4) mit jeweils einem Kontaktierungsende (6) umfasst, und mit einem an dem Trägerelement (1) angeordneten Verbindungselement (13), das die Kontaktierungsenden (6) der Anschlussleiter (4) aufnimmt, wobei an jedem Kontaktierungsende (6) der Anschlussleiter (4) ein Crimpkontakt (8) angecrimpt ist, **dadurch gekennzeichnet, dass** jeder Crimpkontakt (8) jeweils mit seinem freien Ende in eine entsprechende Aufnahme des Verbindungselements (13) eingesteckt ist und im Bereich dieser Aufnahme durch einen Gegenkontakt kontaktierbar ist und dass an dem Trägerelement (1) eine Leuchtmittelaufnahme (19) angeordnet ist.

2. Modul nach Anspruch 1, **dadurch gekennzeichnet, dass** der jeweilige an das Kontaktierungsende (6) angecrimpte Crimpkontakt (8) mindestens ein Befestigungselement (18) aufweist, das die Leiterbahn des Anschlussleiters (4) von der einen Seite zu der anderen Seite hin durchdringt.

3. Modul nach Anspruch 2, **dadurch gekennzeichnet, dass** das Ende des die Leiterbahn durchdringenden Befestigungselements (18), auf der Leiterbahn des Anschlussleiters (4) aufliegend, abgewinkelt ist.

4. Modul nach einem der Ansprüche 1 bis 3, **dadurch gekennzeichnet, dass** das freie Ende des Crimpkontakts (8) als Steckkontakt (9) ausgeführt ist und dass das Verbindungselement (13) eine diesen Steckkontakt (9) aufnehmende Buchse aufweist.

5. Modul nach Anspruch 4, **dadurch gekennzeichnet, dass** der Steckkontakt (9) in der Buchse des Verbindungselements (13) reibschlüssig und/oder kraftschlüssig kontaktiert wird.

6. Modul nach Anspruch 5, **dadurch gekennzeichnet, dass** die Buchse des Verbindungselements (13) als Kontaktbuchse, den Steckkontakt (9) zumindest teilweise umschließend, ausgebildet ist.

7. Modul nach einem der Ansprüche 1 bis 6, **dadurch gekennzeichnet, dass** das freie Ende des Crimpkontakts (8) und/oder die Aufnahme des Verbindungselements (13) mindestens ein Rastelement aufweist (aufweisen), das in das jeweils andere Element rastend eingreift.

8. Modul nach einem der Ansprüche 1 bis 7, **dadurch gekennzeichnet, dass** das Verbindungselement (13) in einer Ausnehmung (10) des Trägerelements (1) eingelassen ist.

9. Modul nach Anspruch 1, **dadurch gekennzeichnet, dass** die Leuchtmittelaufnahme (19) mindestens ein Kontaktteil aufweist, das elektrisch mit entsprechenden Kontaktteilen in dem Verbindungselement (13) verbunden ist.

10. Modul nach einem der Ansprüche 1 bis 9, **dadurch gekennzeichnet, dass** zumindest ein Teil (15) des Verbindungselements (13) einstückig mit dem Trägerelement (1) ausgebildet ist.

11. Modul nach einem der Ansprüche 1 bis 10, **dadurch gekennzeichnet, dass** zwischen dem Trägerelement (1) und dem Foliendrucksensor (2) mindestens eine Reaktionsschicht (11) angeordnet ist.

12. Modul nach einem der Ansprüche 1 bis 11, **dadurch gekennzeichnet, dass** auf der dem Trägerelement (1) abgewandten Seite des Foliendrucksensors (2) eine Deckplatte (21) angeordnet ist.

## Claims

1. Module for seat occupancy detection of a vehicle seat and for arrangement on the bottom side of a vehicle seat, which comprises a plate-shaped carrier element (1) on which a foil pressure sensor (2) is placed, wherein the foil pressure sensor (2) comprises at least one sensor cell (3) and at least two connecting conductors (4) with a respective contacting end (6), and comprising a connection element (13) which is arranged on the carrier element (1) and which receives the contacting ends (6) of the connecting conductors (4), wherein a crimp contact (8) is crimped to each contacting end (6) of the connecting conductors (4), **characterized in that** each crimp contact (8) is respectively inserted with its free end into a corresponding receptacle of the connection element (13) and is contactable by a counter contact in the area of said receptacle, and that a lamp receptacle (19) is arranged on the carrier element (1).

2. Module according to claim 1, **characterized in that** the respective crimp contact (8) which is crimped to the contacting end (6) comprises at least one fastening element (18) which penetrates the conducting path of the connecting conductor (4) from the one side to the other side.

3. Module according to claim 2, **characterized in that** the end of the fastening element (18) penetrating the conducting path is angled, lying on the conducting path of the connecting conductor (4).

4. Module according to any one of claims 1 to 3, **characterized in that** the free end of the crimp contact (8) is designed as a plug contact (9), and that the connection element (13) comprises a socket receiving said plug contact (9).

5. Module according to claim 4, **characterized in that** the plug contact (9) is contacted in the socket of the connection element (13) in a friction-type and/or force-fitting manner.

6. Module according to claim 5, **characterized in that** the socket of the connection element (13) is designed as a contact socket to enclose the plug contact (9) at least in part.

7. Module according to any one of claims 1 to 6, **characterized in that** the free end of the crimp contact (8) and/or the receptacle of the connection element (13) comprise(s) at least one locking element which lockingly engages into the respectively other element.

8. Module according to any one of claims 1 to 7, **characterized in that** the connection element (13) is inserted in a recess (10) of the carrier element (1).

9. Module according to claim 1, **characterized in that** the lamp receptacle (19) comprises at least one contact member which is electrically connected to the corresponding contact members in the connection element (13).

10. Module according to any one of claims 1 to 9, **characterized in that** at least a part (15) of the connection element (13) is integrally formed with the carrier element (1).

11. Module according to any one of claims 1 to 10, **characterized in that** at least one reaction layer (11) is arranged between the carrier element (1) and the foil pressure sensor (2).

12. Module according to any one of claims 1 to 11, **characterized in that** a cover plate (21) is arranged at the side of the foil pressure sensor that faces away from the carrier element (1).

## Revendications

1. Module pour la détection d'occupation d'un siège de véhicule, destiné à être disposé en dessous d'un siège de véhicule, qui comprend un élément de support (1) en forme de plaque, sur lequel est posé un capteur de pression à film (2), le capteur de pression à film (2) comprenant au moins une cellule de capteur (3) et au moins deux conducteurs de raccordement (4) munis chacun d'une extrémité de contact (6), et avec un élément de liaison (13) disposé sur l'élément de support (1), qui loge les extrémités de contact (6) des conducteurs de raccordement (4), un contact à sertissage (8) étant serti à chaque extrémité de contact (6) des conducteurs de raccordement (4), **caractérisé en ce que** chaque contact à sertissage (8) est inséré, avec son extrémité libre, dans un logement correspondant de l'élément de liaison (13) et peut être mis en contact, au niveau de ce logement, par l'intermédiaire d'un contre-contact et **en ce que**, sur l'élément de support (1) est disposé un logement de moyen d'éclairage (19).

2. Module selon la revendication 1, **caractérisé en ce que** le contact à sertissage (8) serti sur l'extrémité de contact (6) comprend au moins un élément de fixation (18) qui traverse la bande conductrice du conducteur de raccordement (4) d'un côté à l'autre.

3. Module selon la revendication 2, **caractérisé en ce que** l'extrémité de l'élément de fixation (18) traversant la bande conductrice, qui repose sur la bande conductrice du conducteur de raccordement (4), est plié.

4. Module selon l'une des revendications 1 à 3, **caractérisé en ce que** l'extrémité libre du contact à sertissage (8) est conçue comme un connecteur (9) et **en ce que** l'élément de liaison (13) comprend une douille logeant ce connecteur (9).

5. Module selon la revendication 4, **caractérisé en ce que** le connecteur (9) est mis en contact dans la douille de l'élément de liaison (13) par friction et/ou par force.

6. Module selon la revendication 5, **caractérisé en ce que** la douille de l'élément de liaison (13) est conçue comme une douille de contact entourant au moins partiellement le connecteur (9).

7. Module selon l'une des revendications 1 à 6, **caractérisé en ce que** l'extrémité libre du contact à sertissage (8) et/ou le logement de l'élément de liaison (13) comprennent au moins un élément d'encliquetage qui s'emboîte par encliquetage dans l'autre élément.

8. Module selon l'une des revendications 1 à 7, **caractérisé en ce que** l'élément de liaison (13) est inséré dans un évidement (10) de l'élément de support (1).

9. Module selon la revendication 1, **caractérisé en ce que** le logement de moyen d'éclairage (19) comprend au moins une partie de contact qui est reliée électriquement avec des parties de contact correspondantes dans l'élément de liaison (13).

10. Module selon l'une des revendications 1 à 9, **caractérisé en ce qu'**au moins une partie (15) de l'élément de liaison (13) est formée d'une seule pièce avec l'élément de support (1).

11. Module selon l'une des revendications 1 à 10, **caractérisé en ce que**, entre l'élément de support (1) et le capteur de pression à film (2) est disposée au moins une couche de réaction (11).

12. Module selon l'une des revendications 1 à 11, **caractérisé en ce que**, sur le côté du capteur de pression à film (2) opposé à l'élément de support (1) est disposée une plaque de recouvrement (21).
